# EUROPÄISCHE PATENTSCHRIFT

(11) **EP 1 233 848 B1**
(45) Veröffentlichungstag und Bekanntmachung des Hinweises auf die Patenterteilung: **02.05.2003**
(21) Anmeldenummer: 00993242.7
(22) Anmeldetag: 29.11.2000
(51) Int. Cl.: B24B 33/08, B24B 33/10, B23P 11/02, B23B 31/02

(54) **HONAHLE**
HONING TOOL
TETE DE PIERRAGE

(30) Priorität: 30.11.1999 DE 29921053 U
(43) Veröffentlichungstag der Anmeldung: 28.08.2002
(73) Patentinhaber: KADIA Produktion GmbH + Co., 72622 Nürtingen (DE)
(72) Erfinder: HENZLER, Bernhard, 72654 Neckartentzlingen (DE)
(74) Vertreter: Patentanwälte Ruff, Wilhelm, Beier, Dauster & Partner
(86) Internationale Anmeldenummer: EP0011960
(87) Internationale Veröffentlichungsnummer: WO01039926

(56) Entgegenhaltungen:
- DE-A- 4 445 111
- DE-C- 19 521 755
- US-A- 5 800 252

## Beschreibung

Die Erfindung betrifft eine Honahle, wie sie im Maschinenbau allgemein bekannt und geläufig ist. Eine schematische Darstellung einer derartigen Honahle kann beispielsweise dem Buch "Lexikon Produktionstechnik Verfahrenstechnik", herausgegeben von Heinz M. Hiersig, Düsseldorf, VDI-Verlag, 1995, Seite 463 ff., entnommen werden.

Derartige weist als Honahlen bezeichnete Honwerkzeuge weisen oft einen Werkzeugkörper und einen Schaft auf. Dabei dient der Werkzeugkörper als Aufnahme für wenigstens eine Honleiste und als Führung für die Zustellstange im Bereich der Honleiste. Der Schaft dient dabei einerseits zur Befestigung an der Spindel des Werkzeugs und andererseits zur Aufnahme des Werkzeugkörpers. Durch den Schaft hindurch wird die Zustellstange zur Spindel geführt. Spindelseitig ist ein Zustellantrieb für die Zustellstange vorgesehen (siehe z.B. DE-A-4 445 111).

Es ist bekannt, den Werkzeugkörper in dem Schaft zu verlöten. Das Einlöten schafft eine dauerhaft sichere Verbindung, die die Ausrichtung dauerhaft beibehält.

Eingelötete Honahlen den Nachteil, daß ein Auswechseln des Werkzeugkörpers und auch der Honleiste kompliziert und aufwendig ist. Um eine leichtere Austauschbarkeit des Werkzeugkörpers zu ermöglichen, wurden schon verschiedentlich Einspannungen vorgenommen, bei denen der Werkzeugkörper über Spannmuttern oder Spannschrauben in einem Spannfutter, das schaftseitig ausgebildet ist, gehalten wird. Ein Nachteil derartiger lösbarer Verbindungen ist es, daß weder beim Einspannen des Werkzeuges in den Schaft noch während des darauffolgenden Betriebes der Honleiste sichergestellt werden kann, daß der Werkzeugkörper fluchtend im Schaft gehalten wird. Vielmehr ergibt sich aufgrund des für die lösbare Befestigung erforderlichen Spieles zwischen den Spannbacken im Schaft und dem Werkzeugkörper das Problem, daß sich die Lage des Werkzeugkörpers während der Einsatzzeit der Honahle verändert. Die Abweichung von der fluchtenden Anbringung der Werkzeugleiste und die Veränderung der Lage der Werkzeugleiste im Schaft führt zu Abweichungen in der Maßhaltigkeit und in der Oberflächengüte des bearbeiteten Werkstückes.

Aufgabe der Erfindung ist es, eine Honahle zu schaffen, die eine über die Standzeit des Werkzeugs hinweg gesicherte fluchtende Ausrichtung des Werkzeugkörpers gewährleistet und die dennoch lösbar ist.

Diese Aufgabe wird erfindungsgemäß durch eine Honahle gemäß dem Anspruch 1 gelöst.

Eine derartige Honahle besteht aus einem rohrförmigen Schaft und einem daran befestigten Werkzeugkörper. Der Schaft weist an seinem dem Werkzeugkörper abgewandten Ende Befestigungsmittel zur Befestigung des Schaftes an einer Spindel einer Honmaschine auf. Es ist wenigstens eine im Werkzeugkörper angeordnete Honleiste vorgesehen, die eine Zustellbewegung durchführen kann, wobei zum Erzeugen der Zustellbewegung eine Zustellstange in den Werkzeugkörper hineinragt. Die Zustellstange ist dabei in dem Schaft verklemmungsfrei axial beweglich geführt. Zwischen Schaft und Werkzeugkörper ist eine Steckverbindung ausgebildet, wobei die Berührflächen von Schaft und Werkzeugkörper im Bereich der Steckverbindung eine unterschiedliche Kontur aufweisen. Dieser Konturunterschied kann durch eine auf eines der beiden Teile einwirkende Kraft aufgehoben werden, indem dieses so elastisch verformt wird, daß eine Konturveränderung im Sinne eines Angleichs der Kontur erfolgt. Durch die Erfindung ist der Werkzeugkörper kraftschlüssig aber lösbar und fluchtend ausgerichtet am Schaft befestigbar.

Es ist festgestellt worden, daß erstaunlicherweise durch die Erfindung die Bearbeitungsgenauigkeit beim Honen um fast eine Größenordnung verbessert werden konnte, z. B. bezüglich der Rundheits-, Zylindrizitäts- und Geradheits-Genauigkeit, z. B. von 1,5 µm auf den für Fachleute fast unglaublichen Wert von 0,5 µm. Dies war mit Honwerkzeugen, auch mit eingelöteten Honahlen, bisher nicht möglich. Es war nicht zu erwarten, daß eine sogar lösbare Einspannung eine so signifikante Verbesserung der Präzision hervorbringen könnte. Vielmehr mußte der Fachmann davon ausgehen, daß es auf die Genauigkeit der Einspannung bei einem "bohrungsfüllenden" Werkzeug, wie einem Honwerkzeug, weniger ankäme, da es sich bestimmungsgemäß in der Bohrung selbst zentrieren soll. Üblicherweise werden Honwerkzeuge sogar an kardanischen oder biegeweichen Adaptern frei pendelnd geführt, um die Selbstzentrierung nicht zu beeinträchtigen.

Gemäß vorteilhafter Ausgestaltung ist die Steckverbindung so ausgebildet, daß der Werkzeugkörper in den freien Kern des rohrförmigen Schaftes hineinsteckbar ist. Weiter vorteilhaft ist es, wenn der Schaft im Bereich der Steckverbindung zum Werkzeugkörper hin eine Kontur - also vorzugsweise eine Innenkontur - aufweist, die unrund ist und daß gleichzeitig der Werkzeugkörper eine runde Kontur aufweist.

Gemäß weiterer bevorzugter Ausgestaltung ist zwischen Schaft und Werkzeugkörper eine Kulissenführung ausgebildet. Vorzugsweise besteht die Kulissenführung aus einer Nut, die beispielsweise im Bereich der Steckverbindung in den Schaft eingebracht ist, und einem Gleitstein, der vorzugsweise an dem Werkzeugkörper ausgebildet ist. Die Kulissenführung dient dem lagedefinierten Einführen des Werkzeugkörpers in den Schaft im Bereich der Steckverbindung.

Gemäß vorteilhafter Ausgestaltung ist zwischen Schaft und Zustellstange eine Kulissenführung ausgebildet, die dem lageorientierten Einführen der Zustellstange in den Schaft und den Werkzeugkörper dient.

Gemäß weiterer Ausgestaltung wird der Schaft während eines Arbeitsganges maschinenseitig, ggf. auch auf der maschinenabgewandten Seite, in einer Führung achsgenau geführt. Diese Führung verbessert die Genauigkeitswerte weiter. Sie ermöglicht es auch, die Honspindel der Maschine von der Aufgabe der achsgenauen Führung des Honwerkzeuges zu entlasten.

Diese Führung kann eine Schmiermittelkammer aufweisen, die zum Schaft hin geöffnet ist. Die Schmiermittelkammer wird durch den Schaft dichtend abgeschlossen. Am Schaft ist ein ringförmiger Kanal vorgesehen, der mit der Schmiermittelkammer der Führung in fluidischer Verbindung ist, wobei der Kanal schaftseitig in dessen hohlen Kern führt und mit einer Endbohrung an der Spitze des Werkzeugkörpers fluidisch verbunden ist.

Gemäß weiterer vorteilhafter Ausgestaltung ist am Schaft eine Fixierschraube zum Festlegen der Lage der Zustellstange im Schaft für die Zeit der Befestigung der Zustellstange an deren maschinenseitigen Antrieb angeordnet.

Gemäß der Erfindung ist also eine Steckverbindung vorgesehen, wobei die bei der Steckverbindung zusammenwirkende Teile Konturunterschiede aufweisen. Dabei ist der Konturunterschied so gewählt, daß er durch externe Krafteinwirkung auf eines der beiden Bauteile durch elastische Verformung aufgehoben werden kann. Wird die Krafteinwirkung aufgehoben, tritt die Verformung wieder ein und durch den bestehenden Konturunterschied wird nun eine klemmende Halterung im Bereich der Steckverbindung erzeugt. Aufgrund der kraftschlüssigen Halterung des Werkzeugkörpers im Schaft stellt sich dabei selbsttätig die fluchtende Ausrichtung des Werkzeugkörpers ein. Gleichzeitig ist sichergestellt, daß die Ausrichtung auch über den Einsatzzeitraum des Werkzeugs aufrecht erhalten bleibt.

Derartige Spannvorrichtungen, die mit zum Ein- und Entspannen elastisch verformbaren Konturunterschieden arbeiten, sind für die Verwendung bei Bohr- bzw. Fräswerkzeugen schon bekannt. Sie sind von der Firma Schunk GmbH & Co. KG in Lauffen, Deutschland, entwickelt worden und werden unter dem Handelsnamen "TRIBOS" vertrieben (siehe auch DE 195 21 755 C1). Im Unterschied zu der bisher bekannten Anwendung bei Werkzeugen mit massiven Schäften, muß aber bei einer Honahle die Zustellstange durch die beiden miteinander so verbundenen Teile in einer gemeinsamen Bohrung hindurchgeführt werden und dort relativ beweglich zu diesen beiden Teilen gelagert sein. Dabei ist es für den Fachmann nicht ohne weiteres ersichtlich, daß die Einspannung, wie sie von den Bohrwerkzeugen her bekannt ist, ohne weiteres auch für die Honwerkzeuge verwendet werden kann, da ihm nicht bekannt ist, inwieweit es aufgrund der hohen auftretenden Klemmkräfte nicht zu einer Verformung eines hohlen Gegenstandes, wie dies der Werkzeugkörper der Honahle ist, kommt. Es ist daher nicht ersichtlich, daß sowohl die fluchtend ausgerichtete kraftschlüssige Lagerung einerseits und das klemmkraftfreie Durchführen der Zustellstange gleichzeitig gewährleistet werden kann. Dies ist um so mehr der Fall, da es sich bei den Honwerkzeugen teilweise um Werkzeuge mit geringen Außendurchmessern handelt. Ferner wird der Fachmann ungeachtet des Bedürfnisses, lösbare Verbindungen zwischen Werkzeugkörper und Schaft herzustellen, von den vorhergehenden Versuchen, die dies mittels von Spannfuttern versucht haben und zu keinem befriedigenden Ergebnis gelangten, nicht ohne weiteres darauf schließen, daß die kraftschlüssige Halterung dem Problem des Erreichens einer dauerhaft fluchtenden Anordnung des Werkzeugkörpers in dem Schaft abhilft, ganz abgesehen davon, daß er, wie vorher ausgeführt, eine Anwendung bei Honwerkzeugen ohnehin nicht als notwendig erachtet hätte.

Weitere Ausgestaltungen der Erfindung können neben den Unteransprüchen auch der Zeichnung entnommen werden. Im übrigen ist die Erfindung anhand der in der Zeichnung dargestellten Ausführung der Erfindung näher beschrieben. Dabei zeigt:
- Fig. 1: eine schematische Schnittdarstellung durch eine erfindungsgemäße Honahle;
- Fig. 2: die Darstellung einer Honahle gemäß Fig. 1, in ihrer Einspannung an einer Spindel einer Honmaschine sowie die Führung der Honahle in der Honmaschine und
- Fig. 3a, 3b: die schematische Darstellung der kraftschlüssigen lösbaren Verbindung.

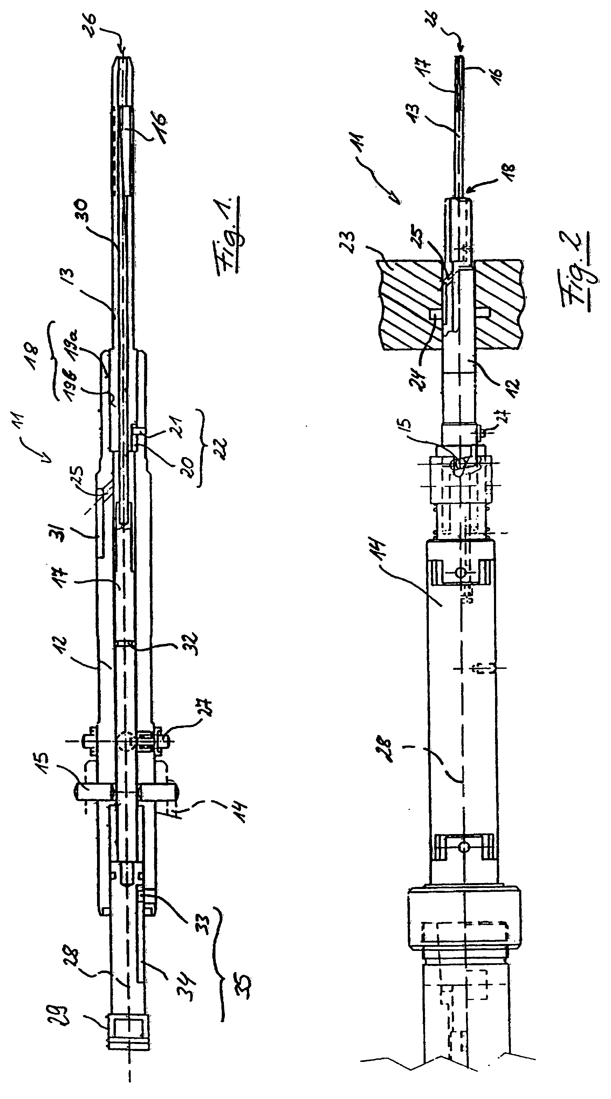

Die Fig. 1 zeigt in Schnittdarstellung eine erfindunggemäße Honahle. Diese Honahle 11 wird gebildet aus dem Schaft 12 und dem Werkzeugkörper 13. Im Werkzeugkörper 13 ist, im dargestellten Ausführungsbeispiel an seinem vorderen, dem Schaft 12 abgewandten Ende, die Honleiste 16 angeordnet. Die Spitze des Werkzeugkörpers 13 weist dabei eine Endbohrung 26 auf, die dazu dient, Honöl oder anderes Gleitschmier- oder Kühlmittel auch in den Grund eines Sackloches, das gehont wird, einzuführen. Die Zustellbewegung, die die Honleiste durchführen muß, damit sie in Anlage mit der zu bearbeitenden Oberfläche gerät, wird durch eine entsprechend der Schrägung der Honleiste angeschrägte, insbesondere keilförmige Zustellstange 17 erzeugt. Die beiden Schrägen von Zustellstange 17 und Honleiste 16 setzen eine Linearbewegung der Zustellstange in axialer Richtung der Drehachse 28 in eine radiale Bewegung der Honleiste um. Bei der Zustellstange 17 handelt es sich dabei um eine aus mehreren Teilstangen zusammgengebaute Stange. Die Zustellstange 17 dient dabei nicht der Übertragung von irgendwelchen Drehmomenten oder der Erzeugung einer Arbeitsbewegung der Honleiste 16 über die zu honende Oberfläche. Sie dient vielmehr nur zur Aufbringung eines geeigneten Anlagedrucks der Honleiste 16 auf der zu honenden Oberfläche. Dabei wird die Auflagekraft im Werkzeugkörper 13 selbst abgestützt. Der Werkzeugkörper 13 kann dazu insbesondere im Bereich der Honleiste 16, aber in Umfangsrichtung 1 versetzt dazu, Anlageflächen aufweisen, die den Werkzeugkörper 13 in der zu honenden Bohrungen führen und die Anlagekraft der Honleiste 16 an der Oberfläche abstützen.

Die Zustellstange 17 ist in einer Bohrung des Werkzeugkörpers 13 geführt und erstreckt sich danach in der inneren Bohrung des Schaftes 12. Der Schaft 12 weist im wesentlichen die Form eines Hohlrohres auf. An dem Ende des Schaftes 12, der dem Werkzeugkörper 13 abgewandt ist, ragt die Zustellstange 17 aus dem Schaft 12 heraus. Dort ist an der Zustellstange 17 eine Befestigungsstelle 29 ausgebildet, die dazu dient, die Zustellstange 17 am maschinenseitigen Stellantrieb zu befestigen. Damit beim Befestigen der Zustellstange 17 im Stellantrieb keine axiale Verschiebung der Zustellstange 17 stattfindet, ist die Fixierschraube 27, die als Madenschraube ausgebildet sein kann, vorgesehen, mittels derer es möglich ist, die Zustellstange 17 für den Zeitraum der Befestigung im Schaft klemmend zu halten. Nach dem öffnen der Madenschraube 27 kann die Zustellstange 17 klemmkraftfrei in dem Schaft 12 axial zur Drehachse 28 verschoben werden. Die axiale Verschiebung der Zustellstange 17 ist auch innerhalb der Bohrung 30 des Werkzeugkörpers 13 möglich.

Der Schaft 12 ist im wesentlichen als hohles Rohr ausgebildet. An seinem dem Werkzeugkörper 13 abgewandten Ende weist er Befestigungsmittel 15 auf, die der Befestigung des Schaftes in der Spindel 14 einer Honmaschine dienen. Die Befestigungsmittel 15 gehören dabei insbesondere zu einem Bajonettverschluß. Sie dienen auch der Übertragung eines Drehmomentes für die Durchführung einer Rotationsbewegung des Schaftes 12 um die Drehachse 28. Die zweite, zur Drehachse 28 axiale Bewegung für den Honvorgang erfolgt dadurch, daß die Spindel 14 der Honmaschine eine oszillierende Bewegung in axialer Richtung der Drehachse 28 durchführt.

Damit auch Sacklochbohrungen, die innen gehont werden, während des Honvorgangs ausreichend gespült und geschmiert werden können, ist an der Spitze des Werkzeugkörpers 13 die Endbohrung 26 ausgebildet. Diese steht fluidisch durch die Innenbohrung 30 des Werkzeugkörpers mit dem inneren Holraum des Schaftes 12 in Verbindung. Der Schaft 12 weist den Kanal 25 auf, der vom Inneren des Schaftes zu der Ringnut 31 führt. Dadurch wird in der Honahle 11 eine fluidische Verbindung zwischen der Ringnut 31, der Schmiermittel bzw. Honöl zugeführt werden kann und der Endbohrung 26 hergestellt. Damit am anderen Ende des Schaftes kein Honöl austritt, ist zwischen der Zustellstange 17 und der Innenwand des Schaftes 12 eine Dichtung 32 angeordnet, die den Fluidweg zur Spindel hin abschließt.

Der Werkzeugkörper 13 ist im Schaft 12 durch die Steckverbindung 18 fluchtend zur Drehachse 28 des Schaftes 12 gehalten. Dazu ist die Innenkontur der Berührungsfläche 19b des Schaftes leicht abweichend von der Außenkontur der Berührfläche 19a des Werkzeugkörpers 13. Die Berührfläche 19a des Werkzeugkörpers 13 wird dabei durch die Außenkontur des Werkzeuges im Bereich der Steckverbindung 18 definiert, während die Berührfläche 19b des Schaftes 12 durch die Innenkontur des Schaftes 12 bzgl. seinem hohlen Innenraum definiert wird. Dabei weist die Kontur der Berührfläche 19a des Werkzeugkörpers 13 eine Abweichung von der Kontur 19b des Schaftes auf und zwar vorzugsweise in Richtung eines gleichseitigen Dreiecks. Die Abweichung von der Kreisform ist sehr gering. Es bilden sich dadurch drei nahezu kreissegmentförmige Berührungsflächen, die den Werkzeugkörper statisch bestimmt relativ großflächig führen und über eine erhebliche axiale Länge, die vorzugsweise mehr als der Durchmesser in diesem Bereich beträgt, führen. Durch den Konturunterschied wird, soweit nicht eine Kraft auf den Schaft im Bereich der Steckverbindung 18 eingeleitet wird, der Werkzeugkörper fluchtend zur Drehachse 28 der Werkzeugkörper 13 festgehalten. Um eine Orientierung des Werkzeugkörpers bzgl. des Schaftes zu ermöglichen, weist der Werkzeugkörper an seinem oberen, dem Schaft 12 zugewandten Ende, eine Nut 20 auf, die bei der Herstellung der Steckverbindung den schaftseitigen Gleitstein 21 aufnimmt. Gleitstein 21 und Nut 20 bilden zusammen die Kulissenführung 22, und richten in radialer Lage die Honleiste 16 aus. Damit die Zustellstange 17 zur Ausrichtung der Honleiste 16 geführt ist, ist am oberen Ende des Schaftes 12, der dem Werkzeugkörper 13 abgewandt ist, die Madenschraube 33 vorgesehen, die in einer Nut 34 gleitet und somit ebenfalls eine Kulissenführung 35 bilden. Somit sind Ausrichtung von Honleiste 16 und Zustellstange 17 in ihrer radialen Lage bzgl. dem Schaft 12 jeweils und somit auch zueinander definiert. Daher ist die korrekte Anlage der Zustellstange an der Schräge der Honleiste 16 gewährleistet.

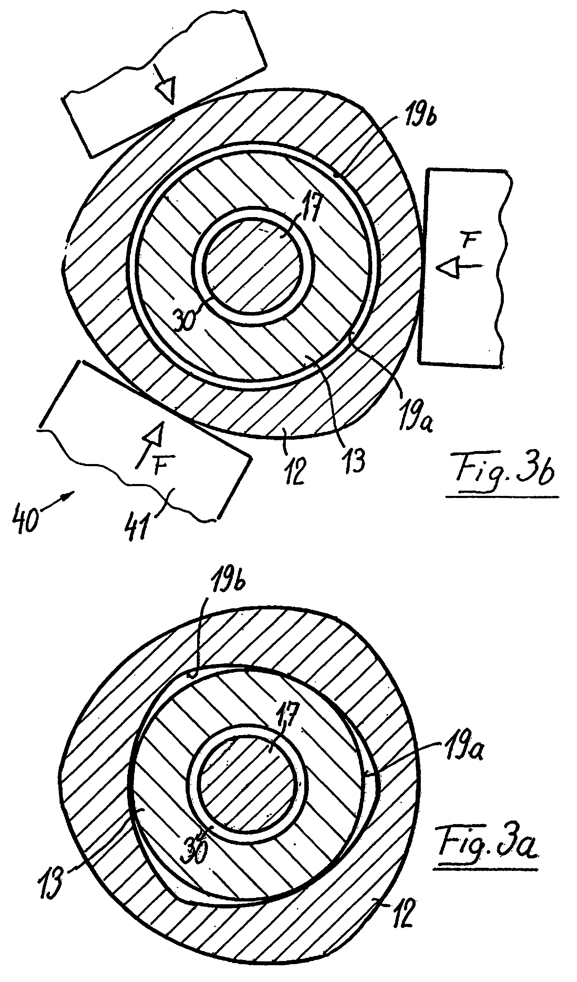

Die Fig. 2 zeigt eine erfindungsgemäße Honleiste in Seitenansicht, die an der maschinenseitigen Spindel 14 der Honmaschine befestigt ist. Die Spindel 14 der Honmaschine weist eine doppelte Gelenkanordnung zum Ausgleich.von Achsabweichungen zwischen Antriebsspindel und Führung der Honahle 11 in der honmaschinenseitigen Führung 23 für eine achsgenaue Führung des Schaftes 12 auf. Durch die Führung 23 und ihre Anordnung so nahe wie möglich an dem Honwerkzeug selbst, insbesondere auf der dem Honwerkzeug zugekehrten Seite des Bejonett-Anschlusses, ist eine genaue Führung des ja auch längs oszillieren angetriebenen Honwerkzeugs sichergestellt, ohne daß Honspindel selbst diese Führungsgenauigkeit zu verlangen ist. Es ist auch möglich, das Honwerkzeug auf der von der Honspindel entfernten Seite des Bearbeitungsbereiches eine Führung vorzusehen, wenn das Werkzeug in diese Richtung entsprechend verlängert ist. Die Honahle 11 ist über die Befestigungsmittel 15, es handelt sich um Dorne, die in die Führungsnut eines Bajonetts, das spindelseitig ausgebildet ist, eingreifen. Zwischen dem Schaft 12 und der Spindel 14 besteht somit eine Bajonettverbindung. Diese Bajonettverbindung ist so ausgebildet, daß das Drehmoment für den rotatorischen Antrieb der Honahle um ihre Drehachse 28 von der Spindel 14 auf die Honahle 11 übertragen werden kann. Die Honahle 11 ist in der Führung 23, die honmaschinenseitig ausgebildet ist, geführt und in ihrer Lage bzgl. dem zu bearbeitenden Werkstück definiert. Dabei ist das zu bearbeitende Werkstück vorzugsweise in einer doppelt kardanischen Aufhängung so in der Nähe der Führung 23 gelagert, daß aufnahmeseitig ein geringfügiger Werkstückversatz gegenüber der durch die Führung 23 definierten Lage der Drehachse 28 möglich ist. Die Lagerung des Werkstücks muß auch geringfügig gegen translatorischen Versatz ausgleichen können.

Damit beim Honen von Sacklöchern eine ausreichende Durchspülung mit Honöl bzw. Kühlschmiermittel sichergestellt ist, weist die Führung 23 die Schmiermittelkammer 24 auf. In die Schmiermittelkammer kann über eine nicht dargestellte Zufuhrleitung Honöl zugeführt werden. Zumindest in der Arbeitsstellung der Honahle 11 ist die Honahle in der Führung 23 geführt und die ringförmige Schmiermittelkammer 24, die zur Honahle 11 hin geöffnet ist, wird durch den Schaft 12 der Honahle 11 abgedichtet. Zusätzlich ist an dem Schaft eine Nut 31 eingebracht, die fluidisch in Verbindung mit der Scbmiermittelkammer 24 ist. Durch den mittels einer Bohrung hergestellten Kanal 25 kann das Honöl in den hohlen Kern des Schaftes 12 gelangen und von dort aus bis zur Endbohrung 26 im Werkzeugkörper 13 fließen. Dort tritt es aus der Honahle 11 aus und befindet sich dann unterhalb des Bearbeitungsstelle im sackloch. Durch das Nachfließen des Honöls wird das Honöl des Sacklochs nach oben über die Bearbeitungsstelle hinweg aus dem Sackloch verdrängt. Es ist somit eine gleichmäßige Kühlschmierung und auch ein gesicherter Abtransport abgetragenen Oberflächenmaterials der bearbeiteten Bohrung sichergestellt.

Mit derartigen Honahlen können Formgenauigkeiten der bearbeiteten Werkstücke bis hin zu 0,5 µm erreicht werden.

Die Figuren 3a und 3b zeigen in schematischer, nicht maßstäblicher Darstellung, wie der Werkzeugkörper 13 im Bereich der Verbindungsstelle der Steckverbindung 18 gehalten wird. Dabei zeigt die Fig. 3a die Situation, in der der Werkzeugkörper 13 in der Steckverbindung 18 festgehalten wird, während in der Fig. 3b die Situation dargestellt ist, daß durch äußere Krafteinwirkung auf den Schaft 12 eine Verformung der Kontur der Berührfläche 19b erreicht wurde, so daß der Werkzeugkörper 13 in den Verbindungsbereich des Schaftes 12 eingeführt oder herausgenommen werden kann. Die Darstellung in Fig. 3a und 3b ist lediglich eine schematische Darstellung zur Erläuterung des Funktionsprinzips. Die Verformungen sind stark überhöht dargestellt.

Gemäß der Fig. 3a weist der Werkzeugkörper 13 eine Berührfläche 19a auf, die durch seine runde Außenkontur definiert ist. In der Mitte des Werkzeugkörpers ist die Zustellstange geführt, wozu der Werkzeugkörper 13 eine axiale Bohrung 30 aufweist. Die Kontur der Berührfläche 19b des Schaftes an seiner dem Innenraum des Hohlrohres zugewandten Seite ist dagegen unrund. Es handelt sich vorzugsweise um ein der Kreisform angenähertes Dreieck, ein Trioval. Das Trioval ist dabei so gewählt, daß es, solange es keiner äußeren Kraft unterliegt, kraftschlüssig klemmend den Werkzeugkörper 13 an seiner Berührfläcbe 19b hält.

Wird auf die Stellen der unrunden Kontur des Schaftes 12 von außen her auf den Schaft eine Kraft aufgebracht, so ist es möglich, den Schaft 12 so zu verformen, daß die Kontur der Berührfläche 19b des Schaftes eine Kreisform annimmt oder sich dieser stark annähert: Dazu wird der Schaft in ein Spannwerkzeug 40 eingebracht, das mit drei radial beweglichen Spannbacken 41 die Verformung vornimmt. Danach wird der Werkzeugkörper der Honahle in die so vergrößerte Schaftbohrung eingebracht. Die angenäherte Kreisform der Schaftbohrung hat dabei einen leicht größeren Durchmesser als der Außendurchmesser des runden Werkzeugkörpers 13 mit seiner Berührfläche 19a. Wird eine Kraft aufgebracht, so ergibt sich die Situation gemäß der Fig. 3b. Durch äußere Verformung des Schaftes 12 durch die eingeleiteten Kräfte F wird die Kontur der Berübrfläche des Schafts an der Innenseite 19b zum Kreis verformt. In dieser Situation kann der Werkzeugkörper 13 mit seiner Bohrung 30 ohne weiteres aus dem Schaft 12 und der Verbindungsstelle 18 herausgezogen oder eingeführt werden. Wie aus der Prinzipdarstellung ersichtlich ist, wirken dabei keinerlei Kräfte auf die Zustellstange 17 ein und dies weder dann wenn auf den Schaft 12 eine Kraft aufgebracht wird, noch dann, wenn der Werkzeugkörper 13 im Schaft 12 kraftschlüssig gehalten ist. Zur Beschreibung des Verbindungssystems wird auch auf die DE 195 21 755 C1 Bezug genommen.

Die fluchtende Ausrichtung des Werkzeugkörpers 13 in dem Schaft 12 ergibt sich dann von alleine während des Kraftabbaus, wenn der Bereich de Steckverbindung eine ausreichende axiale Ausdehnung aufweist. Die Rückverformung der Innenkontur des Schaftes während des Kraftabbaus nach dem Einführen des Werkzeugkörpers erfolgt dabei von allen Seiten gleichmäßig, so daß sich die Lage des Werkzeugkörpers von allein ausrichtet und gleichzeitig eine entsprechende kraftschlüssige Halterung des Werkzeugkörpers 13 im Schaft 12 einstellt.

## Patentansprüche

1. Honahle (11), gebildet aus. einem rohrförmigen Schaft (12) und einem daran befestigten Werkzeugkörper (13), wobei
1.1 der Schaft (12) an seiner dem Werkzeugkörper (13) abgewandten Seite Befestigungsmittel (15) zur Befestigung des Schaftes (12) an einer Spindel (14) einer Honmaschine aufweist,
1.2 eine Zustellstange (17) zum Erzeugen einer Zustellbewegung wenigstens einer in dem Werkzeugkörper geführten Honleiste (16) vorgesehen ist, wobei die Zustellstange (17) im Schaft (12) verklemmungsfrei axialbeweglich geführt ist und in den Werkzeugkörper (13) ragt,
1.3 der Werkzeugkörper (13) kraftschlüssig, lösbar und fluchtend am Schaft (12) befestigt ist,
1.4 wobei zwischen Werkzeugkörper (13) und Schaft (12) eine Steckverbindung (18) ausgebildet ist,
1.5 die Berührflächen (19a, 19b) von Schaft (12) und Werkzeugkörper (13) im Bereich der Steckverbindung (18) eine unterschiedliche Kontur aufweisen und
1.6 wobei die unterschiedliche Kontur so ausgebildet ist, daß zum Lösen der Befestigung im Bereich der Steckverbindung (18) eine von außen einwirkende Kraft (F) aufzubringen ist, die eine elastische Verformung im Sinne einer Ausgleichung der Konturen zur Folge hat,

2. Honahle nach Anspruch 1, **dadurch gekennzeichnet, daß** die Verformung mit einem sektoriell von außen auf den Schaft (12) einwirkenden Spannwerkzeug (40) durchzuführen ist.

3. Honahle nach Anspruch 1 oder 2, **dadurch gekennzeichnet, daß** der Werkzeugkörper (13) in den freien Kern des rohrförmigen Schaftes (12) hineingesteckt ist.

4. Honahle nach einem der vorhergehenden Ansprüche 1, **dadurch gekennzeichnet, daß** der Schaft (12) wenigstens im Bereich der Steckverbindung (18) zumindest im Bereich einer Innenbohrung (19b) eine vorzugsweise nach Art eines einer Kreisform angenäherten Dreiecks ausgebildete Kontur aufweist, die unrund ist, wobei der Werkzeugkörper (13) eine kreisförmige runde Kontur aufweist.

5. Honahle nach einem der vorhergehenden Ansprüche, **dadurch gekennzeichnet, daß** zwischen Schaft (12) und Werkzeugkörper (13) eine Kulissenführung (22) bestehend aus Nut (20) und Gleitstein (21) zum lagedefinierten Einführen des Werkzeugkörpers (13) in den Schaft (12), ausgebildet ist.

6. Honahle nach einem der vorhergehenden Ansprüche, **dadurch gekennzeichnet, daß** zwischen Schaft (12) und Zustellstange (17) eine Kulissenführung (35) zum lageorientierten Einführen der Zustellstange in den Schaft (12) und den Werkzeugkörper (13) ausgebildet ist.

7. Honahle nach einem der vorhergehenden Ansprüche, **dadurch gekennzeichnet**, das die Honahle oder der Schaft (12) achsgenau geführt werden.

8. Honahle nach Anspruch 7, **dadurch gekennzeichnet, daß** der Schaft (12) in einer an den Arbeitsbereich der Honahle nahe anschließenden Längsbewegungen ermöglichenden Führung (23) geführt ist.

9. Honahle nach Anspruch 8, **dadurch gekennzeichnet, daß** die Führung (23) maschinenseitig angeordnet ist und eine zum Schaft (12) hin geöffnete Schmiermittelkammer (24) aufweist, die durch den Schaft (12) dichtend abgeschlossen wird und die eine Zufuhr für Kühlschmiermittel bzw. Honöl aufweist, wobei schaftseitig ein während eines Honvorgangs in der Schmiermittelkammer (24) mündender Kanal (25) in den zur Spindel hin abgedichteten Innenraum des Schaftes führt, der fluidisch mit einer Endbohrung (26) verbunden ist.

10. Honahle nach einem der vorhergehenden Ansprüche, **dadurch gekennzeichnet, daß** am Schaft (12) eine Fixierschraube (27) angeordnet ist, die zum Fixieren der Lage der Zustellstange (17) für die maschinenseitige Befestigung der Zustellstange (17) dient.

## Claims

1. Honing tool (11), formed from a tubular shank (12) and a tool body (13) fixed thereto, in which
1.1 on its side remote from the tool body (13), the shank (12) has fixing means (15) for fixing the shank (12) to a honing machine spindle (14),
1.2 an infeed rod (17) is provided for producing an infeed of at least one honing ledge (16) guided in the tool body, the infeed rod (17) being axially movably guided in jamming-free manner in the shank (12) and projects into the tool body (13),
1.3 the tool body (13) is fixed non-positively, detachably and in aligned manner to the shank (12),
1.4 a plug connection (18) is formed between the tool body (13) and shank (12),
1.5 the contact faces (19a, 19b) of shank (12) and tool body (13) have a different contour in the vicinity of the plug connection (18) and
1.6 the different contour is constructed in such away that for releasing the fixture in the vicinity of the plug connection (18) an externally acting force (F) must be applied, which leads to an elastic deformation in the sense of a contour compensation.

2. Honing tool according to claim 1, **characterized in that** the deformation is to be carried out with a clamping tool (40) acting in sector-like manner from the outside on the shank (12).

3. Honing tool according to claim 1 or 2, **characterized in that** the tool body (13) is engaged in the free core of the tubular shank (12).

4. Honing tool according to one of the preceding claims, **characterized in that**, at least in the vicinity of the plug connection (18) and at least in the vicinity of an inner bore (19b), the shank (12) has a contour preferably in the form of a triangle close to a circular shape and which is non-circular, the tool body (13) having a circular contour.

5. Honing tool according to one of the preceding claims, **characterized in that** between the shank (12) and tool body (13) is formed a connecting link guide (22) comprising groove (20) and slider (21) for the positionally defined introduction of the tool body (13) into the shank (12).

6. Honing tool according to one of the preceding claims, **characterized in that** between the shank (12) and infeed rod (17) is formed a connecting link guide (35) for the positionally oriented introduction of the infeed rod into the shank (12) and tool body (13).

7. Honing tool according to one of the preceding claims, **characterized in that** the honing tool or shank (12) are guided in axially precise manner.

8. Honing tool according to claim 7, **characterized in that** the shank (12) is guided in a guide (23) close to the working area of the honing tool allowing subsequent longitudinal movements.

9. Honing tool according to claim 8, **characterized in that** the guide (23) is located on the machine side and has a lubricant chamber (24) open to the shank (12) and sealingly closed by the latter and which has a supply for lubricant or honing oil and on the shank side a channel (25) issuing during a honing process into the lubricant chamber (24) leads into the interior of the shank sealed towards the spindle and which has a fluidic connection with an end bore (26).

10. Honing tool according to one of the preceding claims, **characterized in that** on the shank (12) is provided a fixing screw (27) used for fixing the position of the infeed rod (17) for the machine-side fixing of said infeed rod (17).

## Revendications

1. Tête de pierrage (11), formée d'une tige (12) tubulaire et d'un corps d'outil (13) fixé sur celle-ci,
1.1 la tige (12) présentant sur son côté opposé au corps d'outil (13) des moyen de fixation (15) pour la fixation de la tige (12) sur une broche (14) d'une machine de honing,
1.2 un arbre d'avance (17) étant prévu pour produire un mouvement d'avance au moins d'un listel de honing (16) guidé dans le corps d'outil, l'arbre d'avance (17) étant guidé dans la tige (12) sans coincements de manière axialement mobile et saillant dans le corps d'outil (13),
1.3 le corps d'outil (13) étant fixé à la tige (12) à engagement par adhérence, de manière amovible et aligné,
1.4 un raccord par enfichage (18) étant réalisé entre le corps d'outil (13) et la tige (12),
1.5 les surfaces de contact (19a, 19b) de la tige (12) et du corps d'outil (13) présentant un contour différent dans le domaine du raccord par enfichage (18) et
1.6 le contour différent étant réalisé de telle manière, que pour obtenir le desserrage de la fixation dans le domaine du raccord. par enfichage (18) il est nécessaire d'appliquer une force (F) par l'extérieur, qui produit une déformation élastique au sens d'une égalisation des contours.

2. Tête de pierrage d'après la revendication 1, **caractérisée en ce que** la déformation doit être opérée par un outil de serrage (40), agissant de l'extérieur par secteurs sur la tige (12).

3. Tête de pierrage d'après la revendication 1 ou 2, **caractérisée en ce que** le corps d'outil (13) est enfiché dans le noyau libre de la tige (12) tubulaire.

4. Tête de pierrage d'après une des revendications précédentes, **caractérisée en ce que** la tige (12) présente au moins dans le domaine du raccord par enfichage (18), au moins dans le domaine d'une forure intérieure (19b) un contour ovalisé, réalisé de préférence à la manière d'un triangle qui se rapproche de la forme circulaire, le corps d'outil (13) présentant un contour de forme circulaire ronde.

5. Tête de pierrage d'après une des revendications précédentes, **caractérisée en ce que** entre la tige (12) et le corps d'outil (13) est réalisé un guidage à coulisse (22) constitué d'une rainure (20) et d'un clavette de guidage (21) pour l'introduction en positionnement déterminé du corps d'outil (13) dans le tige (12).

6. Tête de pierrage d'après une des revendications précédentes, **caractérisée en ce que** entre la tige (12) et l'arbre d'avance (17) est réalisé un guidage à coulisse (35) pour l'introduction en positionnement déterminé de l'arbre d'avance dans la tige (12) et dans le corps d'outil (13).

7. Tête de pierrage d'après une des revendications précédentes, **caractérisée en ce que** la tête de pierrage ou la tige (12) sont guidées avec précision par rapport à l'axe.

8. Tête de pierrage d'après la revendication 7, **caractérisée en ce que** la tige (12) est guidée dans un moyen de guidage (23) situé à proximité du domaine de service de la. tête de pierrage et rendant possible des mouvements longitudinaux.

9. Tête de pierrage d'après la revendication 8, **caractérisée en ce que** le moyen de guidage (23) est disposé du côté de la machine et qu'il dispose d'une chambre de lubrifiant (24) ouverte en direction de la tige (12), laquelle chambre est bouchée de manière étanche au moyen de la tige (12) et qui présente un moyen d'alimentation pour le réfrigérant lubrifiant ou encore pour l'huile de honing, un conduit (25), débouchant du côté de la tige dans la chambre de lubrifiant (24) pendant l'action de honing, conduisant dans l'espace intérieur de la tige étanché en direction de la broche, lequel espace est raccordé de manière hydraulique avec une forure terminale (26).

10. Tête de pierrage d'après une des revendications précédentes, **caractérisée en ce que** sur la tige (12) est disposé une vis de fixation (27), qui sert à fixer le positionnement de l'arbre d'avance (17) pour la retenue côté machine de l'arbre d'avance (17).
